# EUROPEAN PATENT SPECIFICATION

(11) **EP 3 637 565 B1**
(45) Date of publication and mention of the grant of the patent: **20.11.2024**
(21) Application number: 19202235.8
(22) Date of filing: 09.10.2019
(51) Int. Cl.: H01S 1/00

(54) **MASER ENVIRONMENTAL-ANALYSIS SYSTEM**
MASER-UMWELTANALYSESYSTEM
SYSTÈME D'ANALYSE ENVIRONNEMENTALE MAÎTRE

(30) Priority: 10.10.2018 GB 201816511
(43) Date of publication of application: 15.04.2020
(73) Proprietor: AEON Engineering Ltd, Newcastle-under-Lyme, Staffordshire ST5 1HN (GB)
(72) Inventor: Gabrielczyk, Robert, Newcastle-under-Lyme, Staffordshire ST5 1HN (GB)
(74) Representative: Doherty, William

(56) References cited:
- EP-A1- 1 090 282
- US-A- 4 316 153
- US-A1- 2008 035 789
- THOMAS E PARKER: "Environmental Factors and Hydrogen Maser Frequency Stability", IEEE TRANSACTIONS ON ULTRASONICS, FERROELECTRICS, AND FREQUENCY CONTROL, IEEE, USA, vol. 46, no. 3, 1 May 1999 (1999-05-01), pages 745 - 751, XP011090071, ISSN: 0885-3010, DOI: 10.1109/58.764861

## Description

The present invention relates to a maser environmental-analysis system particularly but not necessarily exclusively for determining the suitability of a maser for use in a particular environment having certain environmental characteristics. The invention further relates to a method of determining a suitability of a maser for use in a specific environment, and also to a method of improving environmental analysis of an environment for determination of a suitability of a maser for use in the environment. Masers are devices which generate coherent electromagnetic radiation through stimulated emission, maser being an acronym for microwave amplification by stimulated emission of radiation, and is the equivalent of a laser for microwave radiation. Hydrogen masers, for example, provide stable and accurate timing signals through the spin flip emission of hydrogen atoms.

Hydrogen masers for use within atomic clocks are known to become unstable due to external environmental influences. Changes to parameters in these external conditions can affect the precision of an atomic clock to a significant degree.

Examples of maser systems are presented in US2008/035789A1, EP1090282A1, and US4316153A.

The publication :THOMAS E PARKER: "Environmental Factors and Hydrogen Maser Frequency Stability",IEEE TRANSACTIONS ON ULTRASONICS, FERROELECTRICS, AND FREQUENCY CONTROL, IEEE, USA, vol. 46, no. 3, 1 May 1999 (1999-05-01), pages 745-751, ,ISSN: 0885-3010, DOI: 10.1109/58.764861 discloses measurements of environmental sensitivities of masers.

The expenditure involved in installing masers and atomic clocks is high, and changes to environmental conditions can render a specific maser inoperable. There is significant interest in the development of a maser which can withstand more robust environmental conditions, and also to provide more capabilities for determining whether specific masers will be suitable for use within specific environmental conditions so that users can make informed decisions regarding potential operation.

The present invention seeks to provide a product which is able to obviate the above-referenced problems.

According to a first aspect of the invention, there is provided an environmental-analysis system according to claim 1 for determining suitability for a maser for use in an environment, the environmental-analysis system comprising: a processor configured to receive a plurality of environmental data inputs indicative of a plurality of different environmental characteristics of an environment; a database comprising a plurality of reference-environment data sets, each reference-environment data set respectively comprising data indicative of at least one maser sensitivity coefficient of a different maser for the said plurality of different environmental characteristics in a reference environment; a plurality of environmental-modifier data sets each of which is indicative of a change to the or each maser sensitivity coefficient of the respective different masers in response to changes to the environmental characteristics with respect to the reference environment; the processor comprising a maser-suitability determinator for generating environmental-suitability data indicative of a suitability of the maser for use in the environment based on one of the plurality of reference-environment data sets, one of the plurality of environmental-modifier data sets, and the plurality of environmental data inputs; and an output circuit for providing a data output based on the environmental-suitabiltiy data of each different maser in the environment.

The present system allows a user to analyse the environmental conditions into which they have installed, or intend to install a maser, for example, for the purposes of constructing an atomic clock. There is a desire to be able to utilise masers in rougher conditions than would otherwise be possible, and the present system can make use of environmental characteristics, measured or otherwise, to determine which masers may be suitable for different conditions, or indeed, which masers are likely to be least affected by the relevant environmental conditions.

According to the invention the system comprises a plurality of environmental sensors arranged to measure the environmental characteristics of the environment.

The provision of dedicated sensors which are arranged to measure the environmental characteristics allows for real-time analysis of the environment, which may in turn permit monitoring of the operating effectiveness of the maser over a prolonged period. This information may be used to calculate any offset parameters which may be required to normalise a signal from the maser, if environmental conditions become altered during its operational period.

Optionally, each of the plurality of environmental sensors may be individually and selectably communicable with the maser-suitability determinator.

By allowing individual connection of each individual environmental sensor to the maser-suitability determinator, the analytic capability of the system can be upgraded as required, allowing the user to only select the most relevant environmental characteristics to monitor depending on their needs.

The plurality of environmental sensors may include a vibration sensor; a temperature sensor; and a magnetic field sensor. For example, the vibration sensor may comprise an accelerometer or seismometer, the temperature sensor may comprise a thermistor or thermocouple, and/or the magnetic field sensor may comprise a fluxgate.

The environmental characteristics which are most likely to affect the operational characteristics of the maser are vibrations, temperature, and magnetic field interference. As such, monitoring these parameters in real-time is of most importance for the majority of environments.

Preferably, there may be at least one further said environmental sensor. The at least one further environmental sensor may, for example, be any one of: a voltage sensor; a pressure sensor; or a humidity sensor.

Further sensors may provide additional relevant information which may otherwise modify the operational characteristics of the maser, and this can therefore provide more data for analysis by the maser-suitability determinator.

The plurality of environmental data inputs may comprise user-input environmental data inputs.

Whilst it is preferred that data regarding an environment be directly measured via the one or more sensors for accuracy, it will be appreciated that it may not always be possible to measure this data. In this case, it is preferable to be able to input placeholder data to allow analysis to be performed regardless.

The sensitivity coefficient is an operational characteristic which is likely to be affected by changes in environment, and therefore is important to be monitored. One example of a sensitivity coefficient might be a temperature sensitivity coefficient.

The system may further comprise a user interface communicable with the maser-suitability determinator for providing control instructions to the maser environmental-analysis system.

A user interface providing one or more selection panes for selecting the functionality of the maser environment-analysis system advantageously provides for a wide range of operations which can assist different types of users who may need slightly different information or analysis in relation to their maser set-up.

In one preferable embodiment, the maser-suitability determinator may have a first operational mode which is selectable via the user interface by user selection of a specific maser, wherein in the first operational mode the maser-suitability determinator selects one of the plurality of reference-environment data sets which is indicative of the specific maser and one of the plurality of environmental-modifier data sets which is indicative of the specific maser, the maser-suitability determinator using the selected reference-environment data set and environmental-modifier data set to determine a suitability of the specific maser for use in the environment, the data output being verification data relating to the specific maser.

The verification mode advantageously allows a user to verify the stability of a maser in a chosen environment, and can be used for analytics of masers in use in particular environments by a scientist or verification engineer.

The verification data may comprise a normalised frequency shift of the specific maser for the environment in which the effect of a plurality of said operational characteristics is output for the specific maser.

One advantage of the verification mode of the system is that regular maintenance checks can be performed on the maser to determine whether there has been frequency drift as a result of the environmental conditions in which the maser is operating. This may allow a maintenance engineer to confirm whether the maser is operating within viable conditions. This output may then be in the form of a fractional stability file provides information as to how the various environmental factors affect the or each operational characteristic, which can be used to optimise the environment in which the maser is installed for the best operational characteristics.

In another preferable embodiment, the maser-suitability determinator may have a second operational mode which is selectable via the user interface by user selection of at least two specific masers, wherein in the second operational mode the maser-suitability determinator selects at least two of the plurality of reference-environment data sets which are indicative of the at least two specific masers and at least two of the plurality of environmental-modifier data sets which are indicative of the at least two specific masers, the maser-suitability determinator using the selected reference-environment data sets and environmental-modifier data sets to determine a suitability of the at least two specific masers for use in the environment, the data output being comparison data between the at least two specific masers.

The comparison mode allows for the user to make a preferential decision as to which maser from a selected group of masers is most appropriate for a given environment. This greatly reduces the risk associated with set-up of an expensive maser system.

Preferably, the comparison data may comprise tabulated normalised operational characteristics for the at least two specific masers for the environment.

Tabular data provides an enhanced way of determining which maser is most appropriate for a given situation, improving the user's experience with the selection process.

In another preferable embodiment, the maser-suitability determinator may have a third operational mode which is selectable via the user interface, wherein in the third operational mode the maser-suitability determinator selects the plurality of reference-environment data sets, and the plurality of environmental-modifier data sets, the maser-suitability determinator determining a most suitable one of the plurality of different masers for use in the environment, the data output being selection data regarding the most suitable one of the plurality of different masers.

The selection mode of the system allows for a wide range of masers to be reviewed and cross-compared to determine which maser is most suitable for a particular environment, along with exporting vast amounts of information which may assist with improving the operation of any of the masers. This results in a powerful tool for reducing the risk of set-up of a maser system in the environment.

Optionally, the selection data may comprise tabulated normalised operational characteristics for the plurality of different masers for the environment.

A tabulated output advantageously provides a simple mechanism for visualising the various capabilities of the masers which have been analysed, simplifying the analytic process for the user.

Optionally, the selection data may comprise maximum delta values for the or each operational characteristics of the masers.

The maximum delta values provide information regarding the maximum change of an environmental reference data set in order to maintain a desired stability, for example, normalised frequency shift is reduced to the point at which the maser is operating to a required accuracy.

The system may further comprise an output-analysis circuit which is communicable with the maser-suitability determinator, the output-analysis circuit providing environment improvement data which is indicative of a possible improvement to the environment for maser performance, based on the plurality of environmental data inputs.

The provision of analytic data which is indicative of how a user may improve the environment in which the maser is installed, to thereby improve the performance of the maser by manipulating the environmental characteristics.

Preferably, the system may further comprise an environmental controller configured to control at least one environmental characteristic of the environment based on the environment improvement data to improve the suitability of the maser to be used.

Optional features are disclosed in claim 13.

According to an aspect not in accordance with the invention, there is provided a method of determining a suitability of a maser for use in a specific environment, the method comprising the steps of: a] providing a maser environmental-analysis system in accordance with the first aspect of the invention; b] providing environmental characteristic data to the maser-suitability determinator via the plurality of environmental data inputs, the maser-suitability determinator determining an operational environment of the maser to be used based on one of the plurality of reference-environment data sets, one of the plurality of environmental-modifier data sets, and the plurality of environmental data inputs, the maser-suitability determinator determining a suitability of the maser for use in the environment; and c] outputting the data output indicative of the suitability of the maser to be used to a user.

According to the invention, there is provided a method of improving environmental analysis of an environment for determination of a suitability of a maser for use in the environment, the method comprising the steps of: a] providing a maser environmental-analysis system in accordance with the first aspect of the invention having a plurality of different operational modes; b] selecting one of the different operational modes, each operational mode producing a different data output indicative of the suitability of the maser for use in the environment; and c] determining a suitability of the maser for use in the environment based on the data output from the selected operational mode.

The use of a multi-mode system for determining how environmental conditions might affect the operation of a maser advantageously provides the user with a wide variety of means of analysis for interpreting the suitability of their set-up for a particular requirement.

The invention will now be more particularly described, by way of example only, with reference to the accompanying drawings, in which:
Figure 1 shows a diagrammatic representation of one embodiment of a maser environmental-analysis system in accordance with the first aspect of the invention; and
Figure 2 shows a diagrammatic representation of a plurality of different operating modes of the maser environmental-analysis system of Figure 1.

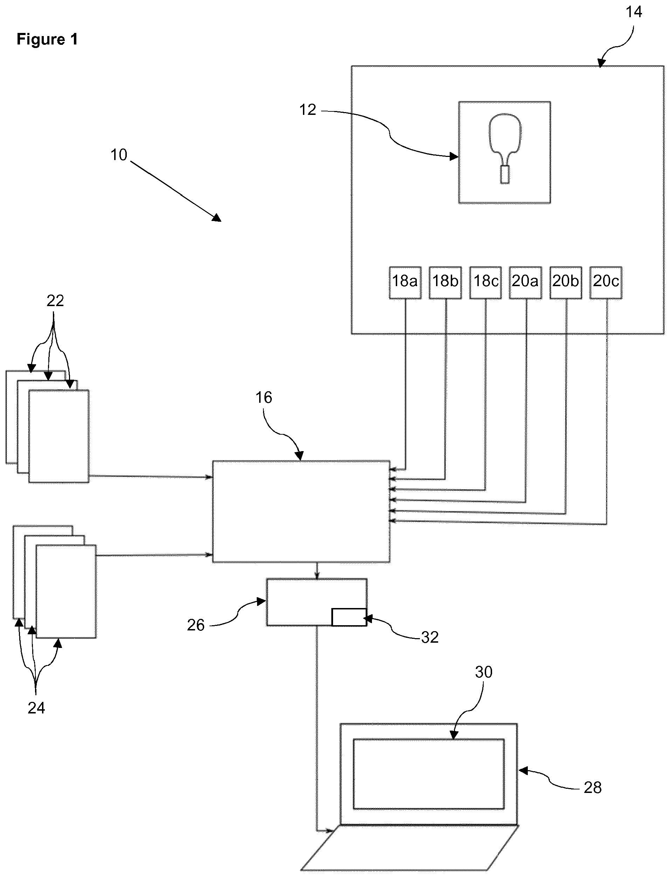

Referring to Figure 1, there is shown a maser environmental-analysis system, indicated globally at 10, which is arranged to provide analysis for a user wishing to operate a maser which is positioned at a maser location 12 in a particular environment 14 having measurable environmental characteristics. Whilst a maser is illustrated in Figure 1 for indicative purposes, it will be appreciated that the present maser environmental analysis system 10 could be used in the absence of a maser, prior to operation, for example.

The analysis of the environment 14 is performed via a maser-suitability determinator 16, and which operates by calculating or emulating the environmental conditions in which the maser is to operate, and then determining the effect this will have on the properties of, and/or the operational characteristics of the maser. The maser-suitability determinator 16 is preferably provided as a programmable processor or similar maser-suitability-determining circuit, and more preferably as a single-board processor, which is capable of receiving several data inputs.

The first of these data inputs is a plurality of environmental data inputs indicative of a plurality of environmental characteristics of an environment in which the maser is to be used. These may, for example, be provided as a plurality of environmental sensors which are located to take measurements directly in the environment in which the maser is to be used. Such sensors may be in wired or wireless communication with the maser-suitability determinator 16. The sensors may be arranged to effectively take a single measurement of their specific environment 14, that is, a snapshot in time, or may be arranged to sample or continuously monitor the environmental characteristics in order to produce an average or real-time updating environmental measurement. This may serve to remove the effects of random fluctuations in the environmental characteristics from producing unhelpful output data.

The environmental characteristics which are most likely to affect the operation of the maser are temperature, vibrations, and magnetic field strength and/or interference in the environment. These may be respectively measured by a temperature sensor 18a, such as a thermistor or thermocouple, a vibration sensor 18b, such as an accelerometer or seismometer, and a magnetic field sensor 18c, such as a fluxgate.

Typically, the maser-suitability determinator 16 may be communicable with at least these three sensors. However, it is preferred that one or more further environmental sensors be provided, such as a voltage sensor 20a, a pressure sensor 20b, and/or a humidity sensor 20c. To this end, the maser-suitability determinator 16 is preferably upgradeable to allow additional sensors to be coupled thereto, to improve the analytic capabilities of the maser environmental-analysis system 10.

The second of the data inputs is a plurality of reference-environment data sets 22 each comprising data indicative of at least one operational characteristic of a different maser for a plurality of environmental characteristics in a reference environment. This is effectively a database of the normal operating characteristics of a wide variety of different masers under controlled conditions, and provides a standard baseline for expected operating behaviour for the maser to be used.

The third data input is a plurality of environmental-modifier data sets 24, each of which is indicative of a change to the or each operational characteristic of the respective different masers in response to changes to the environmental characteristics with respect to the reference environment. This allows the maser-suitability determinator 16 to calculate the expected operational characteristics of the maser under the measured environmental conditions.

It will be apparent that the plurality of reference-environment data sets 22 and the plurality of environmental-modifier data sets 24 may be combined into a single database, such as a database of maser sensitivity coefficients, preferably stored on a single memory storage element, which could be co-located with the maser-suitability determinator 16.

Based on these three groups of data input, the maser-suitability determinator 16 can determine the suitability of a maser for the measured environment 14. The maser-suitability determinator 16 can then be connected to an output circuit 26 for providing a data output indicative of the suitability of the maser to be used to a user of the maser environmental-analysis system 10. In this instance, this may be a display 28 via a user interface 30, for example, on a personal computing device of the user. The output circuit 26 may also be associated with an output-analysis circuit 32 which may or may not be physically co-located with the output circuit 26.

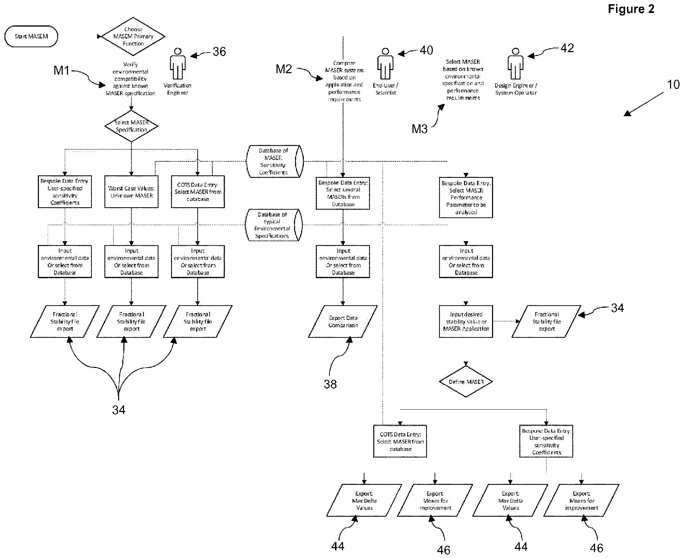

The arrangement of the present system 10 enables it to have several operational modes, which allows for a wide range of analysis of the environment 14 to be performed. These are outlined in the flow diagram of Figure 2.

In a first, or verification, operational mode indicated at M1, the maser-suitability determinator 16 permits selection via the user interface 30 of a specific maser. The maser-suitability determinator 16 selects one of the plurality of reference-environment data sets 22 which is indicative of the specific maser and one of the plurality of environmental-modifier data sets 24 which is indicative of the specific maser. The maser-suitability determinator 16 can then use the selected reference-environment data set 22 and environmental-modifier data set 24 to determine a suitability of the specific maser for use in the environment 14, with the data output being verification data relating to the specific maser.

The verification data is preferably provided in the form of a normalised frequency shift, based on the data provided. From this, the user can see how the accuracy of the maser will shift, based on the environmental conditions to which the maser is subject, as well as the selected maser sensitivity coefficients.

The output of the first operational mode M1 may be a fractional stability file 34, in which the effect of each of a plurality of the environmental characteristics on the or each operational characteristic is output for the specific maser. This allows the user to analyse which of the environmental characteristics may be having the most deleterious effect on the maser. This may be of particular use to maintenance or verification engineers 36 who which to ascertain the performance of a maser in a particular environment. The maser environmental-analysis system 10 can predict the operational characteristics of the maser within the environment 14, which in turn allows the verification engineer 36 to determine whether the maser is operating as would be expected. The maser environmental-analysis system 10 therefore allows the verification engineer 36 to calibrate the maser, if not performing correctly; the maser itself can be fine-tuned until the operational characteristics match those which are presented by the maser-suitability determinator 16.

A second, or comparison, operational mode M2 may also be provided which is selectable via the user interface 30 by user selection of at least two specific masers. The maser-suitability determinator 16 selects at least two of the plurality of reference-environment data sets 22 which are indicative of the at least two specific masers and at least two of the plurality of environmental-modifier data sets 24 which are indicative of the at least two specific masers, the maser-suitability determinator 16 using the selected reference-environment data sets 22 and environmental-modifier data sets 24 to determine a suitability of the at least two specific masers for use in the environment 14, the data output 26 being comparison data between the at least two specific masers.

In this instance, the selection of the masers may be by individual selection of the masers by a user, though it will be appreciated that the selection could be achieved by user selection of a prepopulated list of a plurality of masers, for example, a plurality of masers of a specific class or type.

The comparison data preferably comprises tabulated normalised operational characteristics 38 for the at least two specific masers for the environment 14. This allows the different masers to be compared for performance and/or compliance with the environmental characteristics as measured or input. In this regard, an end-user or scientist 40 is able to analyse which maser is most appropriate for the conditions in which they are intending to operate.

A third, or selection, operational mode M3 may also be provided, which can be selected via the user interface 30. In the third operational mode, the maser-suitability determinator 16 selects the plurality of reference-environment data sets 22, and the plurality of environmental-modifier data sets 24, the maser-suitability determinator 16 determining a most suitable one of the plurality of different masers for use in the environment 14, the data output being selection data regarding the most suitable one of the plurality of different masers.

In effect, in this operational mode M3, the design engineer or systems operator 42 is able to perform analysis of a most suitable maser for use in a particular environment 14, which significantly reduces the risk of wasted expenditure which would otherwise be associated with an inappropriate maser being installed in an unsuitable environment 14.

The output circuit 26 may provide a data file 44 which may be indicative of maximum delta values for the or each operational characteristics of the masers, so that the maser-suitability determinator 16 and/or user 42 can make an informed decision about which maser is most likely to be effective, or the least likely to be adversely affected by the environmental characteristics.

The output-analysis circuit 32, which is communicable with the maser-suitability determinator 16, may provide environment improvement data which is indicative of a possible improvement to the environment 14 for maser performance, based on the plurality of environmental data inputs. This may take the form of a means-for-improvement file 46, which provides specific information as to how a design engineer or systems operator 42 may modify the environmental characteristics to improve the performance of the selected maser.

Furthermore, the output-analysis circuit 32 could be coupled to an environmental controller, such as a processor in communication with one or more environmental characteristic modifiers. Such modifiers could, for example, include: a heater, to modify the temperature; or a humidifier and/or dehumidifier, to modify the humidity. Based on the environment improvement data, the modifications to the environmental characteristics can be automatically implemented, based on the maser already selected.

Whilst a plurality of environmental sensors is detailed in relation to the above-described environment, it will be appreciated that the present invention could be used as a maser environment emulator, without necessarily utilising real-time measurements of the characteristics of the environment. In this scenario, it is possible to provide the maser-suitability determinator with predetermined environmental characteristic data, for example via user-input environmental data inputs, such that an environmental scenario can be simulated for comparison purposes.

It is therefore possible to provide a maser environment-analysis system which can, based on environmental input which is indicative of the environment in which the maser is to be installed, provide analytic data regarding a most suitable maser, or suggested maser, to use. This advantageously limits the risk associated with large expense which can be incurred when a maser is installed in an inappropriate environment.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined by the claims.

## Claims

1. An environmental-analysis system (10) for determining suitability for a maser for use in an environment, the environmental-analysis system (10) comprising:
a plurality of environmental sensors located to take environmental characteristics of the environment;
a processor configured to receive a plurality of environmental data inputs from the plurality of environmental sensors indicative of a plurality of different environmental characteristics of an environment (14);
a database comprising a plurality of reference-environment data sets (22), each reference-environment data set respectively comprising at least one maser sensitivity coefficient of a different maser for the said plurality of different environmental characteristics in a reference environment;
a plurality of environmental-modifier data sets (24) each environmental-modifier data set comprising data indicative of a change to the or each maser sensitivity coefficient of the respective different masers in response to changes to the environmental characteristics with respect to the reference environment;
the processor comprising a maser-suitability determinator (16) for generating environmental-suitability data indicative of a suitability of the maser for use in the environment (14) based on one of the plurality of reference-environment data sets (22), one of the plurality of environmental-modifier data sets, and the plurality of environmental data inputs;
**characterized by**
an output circuit (26) for providing a data output based on the environmental-suitability data of each different maser in the environment (14) in the absence of the maser.

2. An environmental-analysis system (10) as claimed in claim 1, wherein the plurality of environmental sensors includes a temperature sensor (18a); a vibration sensor (18b); and a magnetic field sensor (18c).

3. An environmental-analysis system (10) as claimed in claim 2, wherein the temperature sensor (18a) comprises a thermistor or thermocouple; and/or wherein the vibration sensor (18b) comprises an accelerometer or seismometer; and/or wherein the magnetic field sensor (18c) comprises a fluxgate.

4. An environmental-analysis system (10) as claimed in claim 2 or claim 3, further comprising any one of: a voltage sensor (20a); a pressure sensor (20b); or a humidity sensor (20c).

5. An environmental-analysis system (10) as claimed in any one of the preceding claims, further comprising a user interface (30) communicable with the maser-suitability determinator (16) for providing control instructions to the maser environmental-analysis system (10).

6. An environmental-analysis system (10) as claimed in claim 5, wherein the maser-suitability determinator (16) has a first operational mode which is selectable via the user interface (30) by user selection of a specific maser, wherein in the first operational mode the maser-suitability determinator (16) selects one of the plurality of reference-environment data sets (22) which is indicative of the specific maser and one of the plurality of environmental-modifier data sets (24) which is indicative of the specific maser, the maser-suitability determinator (16) using the selected reference-environment data set (22) and environmental-modifier data set (24) to determine a suitability of the specific maser for use in the environment (14), the data output being verification data relating to the specific maser.

7. An environmental-analysis system (10) as claimed in claim 6, wherein the verification data comprises a normalised frequency shift of the specific maser for the environment (14) in which the effect of a plurality of said operational characteristics is output for the specific maser.

8. An environmental-analysis system (10) as claimed in any one of claims 5 to 7, wherein the maser-suitability determinator has a second operational mode which is selectable via the user interface (30) by user selection of at least two specific masers, wherein in the second operational mode the maser-suitability determinator (16) selects at least two of the plurality of reference-environment data sets (22) which are indicative of the at least two specific masers and at least two of the plurality of environmental-modifier data sets (24) which are indicative of the at least two specific masers, the maser-suitability determinator (16) using the selected reference-environment data sets (22) and environmental-modifier data sets (24) to determine a suitability of the at least two specific masers for use in the environment (14), the data output being comparison data between the at least two specific masers.

9. An environmental-analysis system (10) as claimed in any one of claims 5 to 8, wherein the maser-suitability determinator (16) has a third operational mode which is selectable via the user interface (30), wherein in the third operational mode the maser-suitability determinator (16) selects the plurality of reference-environment data sets (22), and the plurality of environmental-modifier data sets (24), the maser-suitability determinator (16) determining a most suitable one of the plurality of different masers for use in the environment (14), the data output being selection data regarding the most suitable one of the plurality of different masers.

10. An environmental-analysis system as claimed in any one of the preceding claims, further comprising an output-analysis circuit (32) which is communicable with the maser-suitability determinator (16), the output-analysis circuit (32) providing environment improvement data which is indicative of a possible improvement to the environment (14) for maser performance, based on the plurality of environmental data inputs (24).

11. An environmental-analysis system (10) as claimed in claim 10, further comprising an environmental controller configured to control at least one environmental characteristic of the environment based on the environment improvement data to improve the suitability of the maser to be used.

12. An environmental-analysis system (10) as claimed in any one of the preceding claims, wherein the suitability of the maser is assessed based on the accuracy of the maser.

13. An environmental-analysis system (10) as claimed in any one of the preceding claims, wherein the environmental characteristics may include any of: temperature, humidity, vibration, magnetic field interference, voltage, and pressure.

14. A method of improving environmental analysis of an environment (14) for determination of a suitability of a maser for use in the environment (14), the method comprising the steps of:
a] providing an environmental-analysis system (10) as claimed in any one of the preceding claims having a plurality of different operational modes;
b] selecting one of the different operational modes, each operational mode producing a different data output indicative of the suitability of the maser for use in the environment (14); and
c] determining a suitability of the maser for use in the environment (14) based on the data output from the selected operational mode.

## Patentansprüche

1. Umgebungsanalysesystem (10) zum Bestimmen einer Eignung für einen Maser zur Verwendung in einer Umgebung, wobei das Umgebungsanalysesystem (10) umfasst:
eine Vielzahl von Umgebungssensoren, die angeordnet sind, um Umgebungscharakteristika der Umgebung zu erfassen;
einen Prozessor, der dazu konfiguriert ist, eine Vielzahl von Umgebungsdateneingängen von der Vielzahl von Umgebungssensoren zu empfangen, die eine Vielzahl von unterschiedlichen Umgebungscharakteristika einer Umgebung (14) angeben;
eine Datenbank, die eine Vielzahl von Referenzumgebungsdatensätzen (22) umfasst, wobei jeder Referenzumgebungsdatensatz jeweils mindestens einen Maser-Empfindlichkeitskoeffizienten eines unterschiedlichen Masers für die Vielzahl von unterschiedlichen Umgebungscharakteristika in einer Referenzumgebung umfasst,
eine Vielzahl von Umgebungsmodifikatordatensätzen (24), wobei jeder Umgebungsmodifikatordatensatz Daten umfasst, die eine Veränderung des oder jedes Maser-Empfindlichkeitskoeffizienten der jeweiligen unterschiedlichen Maser als Reaktion auf Veränderungen der Umgebungscharakteristika in Bezug auf die Referenzumgebung angeben;
wobei der Prozessor einen Maser-Eignungsdeterminator (16) zum Erzeugen von Umgebungseignungsdaten umfasst, die eine Eignung des Masers zur Verwendung in der Umgebung (14) auf der Basis eines von der Vielzahl von Referenzumgebungsdatensätze (22), eines von der Vielzahl von Umgebungsmodifikatordatensätzen und der Vielzahl von Umgebungsdateneingängen angeben;
**gekennzeichnet durch**
eine Ausgangsschaltung (26) zum Bereitstellen eines Datenausgangs auf der Basis der Umgebungseignungsdaten jedes unterschiedlichen Masers in der Umgebung (14) in Abwesenheit des Masers.

2. Umgebungsanalysesystem (10) nach Anspruch 1, wobei die Vielzahl von Umgebungssensoren einen Temperatursensor (18a); einen Vibrationssensor (18b) und einen Magnetfeldsensor (18c) beinhaltet.

3. Umgebungsanalysesystem (10) nach Anspruch 2, wobei der Temperatursensor (18a) einen Thermistor oder ein Thermoelement umfasst und/oder wobei der Vibrationssensor (18b) einen Beschleunigungsmesser oder ein Seismometer umfasst und/oder wobei der Magnetfeldsensor (18c) einen Magnetfeldmesser umfasst.

4. Umgebungsanalysesystem (10) nach Anspruch 2 oder Anspruch 3, weiterhin umfassend einen beliebigen von: einem Spannungssensor (20a); einem Drucksensor (20b) oder einem Feuchtigkeitssensor (20c).

5. Umgebungsanalysesystem (10) nach einem der vorhergehenden Ansprüche, weiterhin umfassend eine Benutzeroberfläche (30), die mit dem Maser-Eignungsdeterminator (16) kommunizierbar ist, zum Bereitstellen von Steueranweisungen an das Maser-Umgebungsanalysesystem (10).

6. Umgebungsanalysesystem (10) nach Anspruch 5, wobei der Maser-Eignungsdeterminator (16) einen ersten Betriebsmodus aufweist, der mittels der Benutzeroberfläche (30) durch Benutzerauswahl eines spezifischen Masers wählbar ist, wobei der Maser-Eignungsdeterminator (16) im ersten Betriebsmodus einen von der Vielzahl von Referenzumgebungsdatensätzen (22), der den spezifischen Maser angibt, und einen von der Vielzahl von Umgebungsmodifikatordatensätzen (24), der den spezifischen Maser angibt, auswählt, wobei der Maser-Eignungsdeterminator (16) den ausgewählten Referenzumgebungsdatensatz (22) und den ausgewählten Umgebungsmodifikatordatensatz (24) dazu verwendet, eine Eignung des spezifischen Masers zur Verwendung in der Umgebung (14) zu bestimmen, wobei es sich bei dem Datenausgang um Verifikationsdaten in Bezug auf den spezifischen Maser handelt.

7. Umgebungsanalysesystem (10) nach Anspruch 6, wobei die Verifikationsdaten eine normalisierte Frequenzverschiebung des spezifischen Masers für die Umgebung (14) umfassen, in der die Wirkung einer Vielzahl der Betriebscharakteristika für den spezifischen Maser ausgegeben ist.

8. Umgebungsanalysesystem (10) nach einem der Ansprüche 5 bis 7, wobei der Maser-Eignungsdeterminator einen zweiten Betriebsmodus aufweist, der mittels der Benutzeroberfläche (30) durch Benutzerauswahl von mindestens zwei spezifischen Masern wählbar ist, wobei der Maser-Eignungsdeterminator (16) im zweiten Betriebsmodus mindestens zwei von der Vielzahl von Referenzumgebungsdatensätzen (22), die die mindestens zwei spezifischen Maser angeben, und mindestens zwei von der Vielzahl von Umgebungsmodifikatordatensätzen (24), die die mindestens zwei spezifischen Maser angeben, auswählt, wobei der Maser-Eignungsdeterminator (16) die ausgewählten Referenzumgebungsdatensätze (22) und die ausgewählten Umgebungsmodifikatordatensätze (24) dazu verwendet, eine Eignung der mindestens zwei spezifischen Maser zur Verwendung in der Umgebung (14) zu bestimmen, wobei es sich bei dem Datenausgang um Vergleichsdaten in Bezug auf die mindestens zwei spezifischen Maser handelt.

9. Umgebungsanalysesystem (10) nach einem der Ansprüche 5 bis 8, wobei der Maser-Eignungsdeterminator (16) einen dritten Betriebsmodus aufweist, der mittels der Benutzeroberfläche (30) wählbar ist, wobei der Maser-Eignungsdeterminator (16) im dritten Betriebsmodus die Vielzahl von Referenzumgebungsdatensätzen (22) und die Vielzahl von Umgebungsmodifikatordatensätzen (24) auswählt, wobei der Maser-Eignungsdeterminator (16) einen am meisten geeigneten von der Vielzahl von unterschiedlichen Masern zur Verwendung in der Umgebung (14) bestimmt, wobei es sich bei dem Datenausgang um Auswahldaten in Bezug auf den am meisten geeigneten von der Vielzahl von unterschiedlichen Masern handelt.

10. Umgebungsanalysesystem nach einem der vorhergehenden Ansprüche, weiterhin umfassend eine Ausgangsanalyseschaltung (32), die mit dem Maser-Eignungsdeterminator (16) kommunizierbar ist, wobei die Ausgangsanalyseschaltung (32) Umgebungsverbesserungsdaten bereitstellt, die eine mögliche Verbesserung der Umgebung (14) für die Maser-Leistung auf der Basis der Vielzahl von Umgebungsdateneingängen (24) angeben.

11. Umgebungsanalysesystem (10) nach Anspruch 10, weiterhin umfassend eine Umgebungssteuerung, die dazu konfiguriert ist, mindestens ein Umgebungscharakteristikum der Umgebung auf der Basis der Umgebungsverbesserungsdaten zu steuern, um die Eignung des zu verwendenden Masers zu verbessern.

12. Umgebungsanalysesystem (10) nach einem der vorhergehenden Ansprüche, wobei die Eignung des Masers auf der Basis der Genauigkeit des Masers beurteilt wird.

13. Umgebungsanalysesystem (10) nach einem der vorhergehenden Ansprüche, wobei die Umgebungscharakteristika eine bzw. einen beliebigen der folgenden beinhalten können: Temperatur, Feuchtigkeit, Vibration, Magnetfeldinterferenz, Spannung und Druck.

14. Verfahren zur Verbesserung einer Umgebungsanalyse einer Umgebung (14) zur Bestimmung einer Eignung eines Masers zur Verwendung in der Umgebung (14), wobei das Verfahren die Schritte umfasst:
a] Bereitstellen eines Umgebungsanalysesystems (10) nach einem der vorhergehenden Ansprüche, das eine Vielzahl von unterschiedlichen Betriebsmodi aufweist,
b] Auswählen eines der unterschiedlichen Betriebsmodi, wobei jeder Betriebsmodus einen anderen Datenausgang produziert, der die Eignung des Masers zur Verwendung in der Umgebung (14) angibt, und
c] Bestimmen einer Eignung des Masers zur Verwendung in der Umgebung (14) auf der Basis des Datenausgangs von dem ausgewählten Betriebsmodus.

## Revendications

1. Un système d'analyse environnementale (10) permettant de déterminer l'adéquation d'un maser à une utilisation dans un environnement, le système d'analyse environnementale (10) comprenant :
une pluralité de capteurs environnementaux situés de façon à capturer des caractéristiques environnementales de l'environnement ;
un processeur configuré pour recevoir une pluralité d'entrées de données environnementales provenant de la pluralité de capteurs environnementaux indiquant une pluralité de caractéristiques environnementales différentes d'un environnement (14) ;
une base de données comprenant une pluralité d'ensembles de données d'environnement de référence (22), chaque ensemble de données d'environnement de référence comprenant respectivement au moins un coefficient de sensibilité maser d'un maser différent pour ladite pluralité de caractéristiques environnementales différentes dans un environnement de référence ;
une pluralité d'ensembles de données de modificateur environnemental (24), chaque ensemble de données de modificateur environnemental comprenant des données indiquant un changement du ou de chaque coefficient de sensibilité maser des différents masers respectifs en réponse à des changements des caractéristiques environnementales par rapport à l'environnement de référence ;
le processeur comprenant un déterminateur d'adéquation du maser (16) pour générer des données d'adéquation environnementale indiquant une adéquation du maser à une utilisation dans l'environnement (14) sur la base d'un ensemble de données d'environnement de référence parmi la pluralité d'ensembles de données de modificateur environnemental et de la pluralité d'entrées de données environnementales ; **caractérisé par** un circuit de sortie (26) pour fournir une sortie de données sur la base des données d'adéquation environnementale de chaque maser différent dans l'environnement (14) en l'absence du maser.

2. Un système d'analyse environnementale (10) selon la revendication 1, dans lequel la pluralité de capteurs environnementaux comprend un capteur de température (18a) ; un capteur de vibrations (18b) ; et un capteur de champ magnétique (18c).

3. Un système d'analyse environnementale (10) selon la revendication 2, dans lequel le capteur de température (18a) comprend une thermistance ou un thermocouple ; et/ou dans lequel le capteur de vibrations (18b) comprend un accéléromètre ou un sismomètre ; et/ou dans lequel le capteur de champ magnétique (18c) comprend un magnétomètre à saturation.

4. Un système d'analyse environnementale (10) selon la revendication 2 ou la revendication 3, comprenant en outre l'un quelconque des éléments suivants : un capteur de tension (20a) ; un capteur de pression (20b) ; ou un capteur d'humidité (20c).

5. Un système d'analyse environnementale (10) selon l'une quelconque des revendications précédentes, comprenant en outre une interface utilisateur (30) pouvant communiquer avec le déterminateur d'adéquation maser (16) pour fournir des instructions de commande au système d'analyse environnementale maser (10).

6. Un système d'analyse environnementale (10) selon la revendication 5, dans lequel le déterminateur d'adéquation de maser (16) dispose d'un un premier mode de fonctionnement qui peut être sélectionné via l'interface utilisateur (30) par sélection par l'utilisateur d'un maser spécifique, dans lequel, dans le premier mode de fonctionnement, le déterminateur d'adéquation de maser (16) sélectionne l'un de la pluralité d'ensembles de données d'environnement de référence (22) qui est indicatif du maser spécifique et l'un de la pluralité d'ensembles de données de modificateur environnemental (24) qui est indicatif du maser spécifique, le déterminateur d'adéquation de maser (16) utilisant l'ensemble de données d'environnement de référence sélectionné (22) et l'ensemble de données de modificateur environnemental (24) pour déterminer l'adéquation du maser spécifique à une utilisation dans l'environnement (14), la sortie de données étant des données de vérification relatives au maser spécifique.

7. Un système d'analyse environnementale (10) selon la revendication 6, dans lequel les données de vérification comprennent un décalage de fréquence normalisé du maser spécifique pour l'environnement (14) dans lequel l'effet d'une pluralité desdites caractéristiques opérationnelles est émis pour le maser spécifique.

8. Un système d'analyse environnementale (10) selon l'une quelconque des revendications 5 à 7, dans lequel le déterminateur d'adéquation de maser dispose d'un second mode de fonctionnement qui peut être sélectionné via l'interface utilisateur (30) par sélection par l'utilisateur d'au moins deux masers spécifiques, dans lequel, dans le second mode de fonctionnement, le déterminateur d'adéquation de maser (16) sélectionne au moins deux de la pluralité d'ensembles de données d'environnement de référence (22) qui sont indicatifs des au moins deux masers spécifiques et au moins deux de la pluralité d'ensembles de données de modificateur environnemental (24) qui sont indicatifs des au moins deux masers spécifiques, le déterminateur d'adéquation de maser (16) utilisant les ensembles de données d'environnement de référence (22) sélectionnés et les ensembles de données de modificateur environnemental (24) pour déterminer une adéquation des au moins deux masers spécifiques à une utilisation dans l'environnement (14), la sortie de données étant des données de comparaison entre les au moins deux masers spécifiques.

9. Un système d'analyse environnementale (10) selon l'une quelconque des revendications 5 à 8, dans lequel le déterminateur d'adéquation de maser (16) dispose d'un troisième mode de fonctionnement qui peut être sélectionné via l'interface utilisateur (30), dans lequel, dans le troisième mode de fonctionnement, le déterminateur d'adéquation de maser (16) sélectionne la pluralité d'ensembles de données d'environnement de référence (22) et la pluralité d'ensembles de données de modificateur environnemental (24), le déterminateur d'adéquation de maser (16) déterminant un maser le plus approprié parmi la pluralité de masers différents pour une utilisation dans l'environnement (14), la sortie de données étant des données de sélection concernant le maser le plus approprié parmi la pluralité de masers différents.

10. Un système d'analyse environnementale selon l'une quelconque des revendications précédentes, comprenant en outre un circuit d'analyse de sortie (32) qui peut communiquer avec le déterminateur d'adéquation du maser (16), le circuit d'analyse de sortie (32) fournissant des données d'amélioration de l'environnement qui indiquent une amélioration possible de l'environnement (14) pour les performances du maser, sur la base de la pluralité d'entrées de données environnementales (24).

11. Un système d'analyse environnementale (10) selon la revendication 10, comprenant en outre un contrôleur environnemental configuré pour contrôler au moins une caractéristique environnementale de l'environnement sur la base des données d'amélioration de l'environnement pour améliorer l'adéquation du maser à utiliser.

12. Un système d'analyse environnementale (10) selon l'une quelconque des revendications précédentes, dans lequel l'adéquation du maser est évaluée sur la base de la précision du maser.

13. Un système d'analyse environnementale (10) selon l'une quelconque des revendications précédentes, dans lequel les caractéristiques environnementales peuvent inclure l'une quelconque des caractéristiques suivantes : température, humidité, vibration, interférence de champ magnétique, tension et pression.

14. Un procédé d'amélioration de l'analyse environnementale d'un environnement (14) pour déterminer l'adéquation d'un maser à une utilisation dans l'environnement (14), le procédé comprenant les étapes consistant à :
a) fournir un système d'analyse environnementale (10) tel que revendiqué dans l'une quelconque des revendications précédentes ayant une pluralité de modes de fonctionnement différents ;
b) sélectionner l'un des différents modes de fonctionnement, chaque mode de fonctionnement produisant une sortie de données différente indiquant l'adéquation du maser à l'utilisation dans l'environnement (14) ; et
c) déterminer l'adéquation du maser à l'utilisation dans l'environnement (14) sur la base des données de sortie du mode de fonctionnement sélectionné.
